(19) **Europäisches Patentamt / European Patent Office / Office européen des brevets**

(11) **EP 4 414 907 B1**

(12) # FASCICULE DE BREVET EUROPEEN

(45) Date de publication et mention de la délivrance du brevet:
**20.08.2025   Bulletin 2025/34**

(21) Numéro de dépôt: **24155206.6**

(22) Date de dépôt: **01.02.2024**

(51) Classification Internationale des Brevets (IPC):
**G06Q 10/04** *(2023.01)*    **G06Q 50/06** *(2024.01)*

(52) Classification Coopérative des Brevets (CPC):
**G06Q 10/04; G06Q 50/06**

(54) **PROCÉDÉ DE POSITIONNEMENT DE STATIONS DE RECHARGE POUR VÉHICULES ÉLÉCTRIQUES DANS UN ESPACE PRÉDETERMINÉ**

VERFAHREN ZUR POSITIONSBESTIMMUNG VON LADESTATIONEN FÜR ELEKTRISCHE FAHRZEUGE IN EINEM BESTIMMTEN BEREICH

METHOD OF POSITIONING CHARGING STATIONS FOR ELECTRIC VEHICLES IN A PREDETERMINED AREA

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **09.02.2023   FR 2301211**

(43) Date de publication de la demande:
**14.08.2024   Bulletin 2024/33**

(73) Titulaire: **IFP Energies nouvelles**
**92500 Rueil-Malmaison (FR)**

(72) Inventeurs:
• **DE NUNZIO, Giovanni**
**92852 Rueil-Malmaison Cedex (FR)**
• **SCIARRETTA, Antonio**
**92852 Rueil-Malmaison Cedex (FR)**
• **BEN GHARBIA, Ibtihel**
**92852 Rueil-Malmaison Cedex (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
• **SHAOYUN GE ET AL: "The planning of electric vehicle charging station based on Grid partition method", ELECTRICAL AND CONTROL ENGINEERING (ICECE), 2011 INTERNATIONAL CONFERENCE ON, IEEE, 16 September 2011 (2011-09-16), pages 2726 - 2730, XP031960248, ISBN: 978-1-4244-8162-0, DOI: 10.1109/ ICECENG.2011.6057636**
• **ISLAM MD MAINUL ET AL: "Optimal location and sizing of fast charging stations for electric vehicles by incorporating traffic and power networks", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, vol. 12, no. 8, 1 October 2018 (2018-10-01), pages 947 - 957, XP006081714, ISSN: 1751-956X, DOI: 10.1049/IET-ITS.2018.5136**

EP 4 414 907 B1

## Description

### Domaine technique

L'invention concerne un procédé de positionnement de stations de recharge pour véhicules électriques dans un espace prédéterminé.

Il concerne également la construction de stations de recharge dans l'espace prédéterminé ainsi qu'un produit programme d'ordinateur.

Des études récentes indiquent que les besoins de la plupart des foyers possédant une seule voiture seraient satisfaits tout en ne nécessitant aucune modification comportementale de plus de 5 % des jours. Cependant, l'inquiétude liée à l'autonomie de conduite est sans doute inévitable pour l'utilisateur. Afin de surmonter ce problème et d'éviter de ralentir les ventes et la diffusion des véhicules électriques, les planificateurs d'itinéraires se répandent de nos jours rapidement.

Si l'optimisation d'itinéraire et de stratégie de recharge représentent des fonctionnalités importantes pour les utilisateurs de véhicules électriques, il existe d'autres leviers pour aider les utilisateurs à passer à l'électromobilité et à les guider dans le choix du véhicule électrique le plus adapté à leurs besoins. En particulier, l'optimisation du placement de l'infrastructure des stations de recharge pour véhicules électriques sur le territoire représente un outil d'importance majeure pour lever les freins à l'adoption de l'électromobilité.

La méconnaissance de la consommation des véhicules électriques en usage réel, ainsi que la disponibilité encore limitée de stations de recharge sur le territoire, représentent aujourd'hui deux freins majeurs à l'adoption à large échelle des véhicules électriques. Les véhicules électriques sont souvent achetés en fonction des rares besoins de longs trajets à effectuer sur l'année. En d'autres mots, les utilisateurs souhaitent que la batterie du véhicule soit suffisamment grande pour permettre le trajet complet (par exemple du domicile au lieu de vacances) avec le nombre de recharges minimum. Cela pousse à acheter des véhicules avec de grandes batteries qui ne sont guère adaptés à un usage quotidien et qui présentent des émissions de $CO_2$ équivalentes (en considérant tout le cycle de vie du véhicule) comparables aux véhicules conventionnels. Du côté de l'infrastructure des stations de recharge, la croissance incrémentale de l'offre en stations de recharge n'est pas non plus optimale car les lieux pour l'installation de stations de recharge sont limités et la décision d'installation est souvent pilotée par la demande qui est plus élevée à proximité des grandes agglomérations. Cependant, cela ne couvre pas le territoire de manière homogène ou optimale, créant ainsi des zones blanches, ce qui entretient le cercle vicieux d'incitation à l'achat de véhicules avec de grandes batteries.

Il est donc nécessaire de rassurer les conducteurs sur la dissémination des stations de recharge (aussi appelées « bornes de recharge »), et de suggérer des itinéraires et des séquences de recharge intelligents sur les longues distances pour atteindre la destination finale en perdant le moins de temps possible.

D'autres études montrent que, puisque l'infrastructure des stations de recharge n'est pas encore omniprésente, une planification appropriée des itinéraires pour les véhicules électriques est nécessaire.

### Technique antérieure

Le document : « Liu, J., Peper, J., Lin, G., Zhou, Y., Awasthi, S., Li, Y., Rehtanz, C., 2021. A planning strategy considering multiple factors for electric vehicle charging stations along German motorways. International Journal of Electrical Power & Energy Systems, Volume 124 » envisage une planification de l'emplacement de l'infrastructure des stations de recharge pour réduire l'anxiété de l'utilisateur liée à l'autonomie. Toutefois, cette méthode ne prévoit la mise en place des stations de recharge que sur les aires de service d'autoroute et n'est donc pas adaptée à tous les trajets. De plus, elle utilise un algorithme génétique qui donne souvent des solutions inexactes, loin de l'optimum. En outre, cette méthode ne tient pas compte des données géographiques et temporelles de trafic qui peuvent influencer significativement le temps de parcours et la consommation d'énergie. La méthode est donc limitée aux trajets essentiellement réalisés par autoroutes, n'est pas précise et est longue et complexe à mettre en œuvre.

On connait également la demande de brevet US2016/300170 AA qui cherche à positionner des stations de recharge dans un espace. Cette méthode est basée sur la demande de distribution de recharge qui est collectée par acquisition sur des véhicules électriques. Ainsi, pour développer des stations de recharge, cela suppose que certains véhicules réalisent le trajet. Or, lorsqu'aucune station de recharge n'est située sur un certain trajet, il ne devrait pas y avoir de véhicules électriques sur ledit trajet. Ainsi, les résultats de cette méthode se trouve biaisée par les trajets actuellement réalisables en véhicules électriques.

On connait également les publications :

- Shaoyun GE et AI « the planning of electric vehicle charging station base on grid partition method » ICECE, 16 septembre 2011, pages 2726-2730, XP031960428, DOI :10.1109/ICECENG.2011.6057636, ISBN : 978-1-4244-8162-0

- et Islam MD Mainul et AI « Optimal location and sizing of fast charging stations for electric vehicles by incorporating traffic and power networks" IET Intelligent transport systems, the Institution of engineering and technology, Michael Faraday House, Six Hills Way, Stevenage, Herts. SG1 2AY, UK, vol. 12, no. 8, 1 octobre 2018, pages 947-957, XP006081714, ISSN: 1751-956X, DOI: 10.1049/IET-ITS.2018.5136.

De plus, l'optimisation réalisée consiste à trouver un compromis entre le coût de construction des stations de recharge et la couverture géographique.

Ainsi, le problème technique que cherche à résoudre la présente invention consiste à optimiser le positionnement des stations de recharge pour véhicules électriques dans une certaine zone (département, pays, état, région du monde) afin que le plus de trajet en véhicule électrique soit réalisable, en optimisant le temps de parcours et/ou la consommation énergétique pour chaque trajet et ce avec une méthode simple et précise.

**Résumé de l'invention**

L'invention concerne un procédé de positionnement de stations de recharge pour véhicules électriques dans un espace prédéterminé donné comprenant un réseau routier pour construire des stations de recharge dans l'espace prédéterminé, le réseau routier comprenant des portions de route reliées entre elles par des intersections, dans lequel on réalise au moins les étapes suivantes :

a) on définit des trajets possibles dans l'espace prédéterminé, chaque trajet possible partant d'une origine et arrivant à une destination,

b) on utilise un planificateur d'itinéraires pour déterminer au moins un itinéraire possible pour chaque trajet possible, chaque itinéraire possible étant défini par une succession de portions de route, et en supposant que chaque intersection comprend une station de recharge potentielle, et on détermine le temps de parcours pour parcourir l'itinéraire possible par un véhicule électrique et/ou la consommation d'énergie par le véhicule électrique de chaque itinéraire possible ainsi que la position des stations de recharge potentielles utilisées par le véhicule électrique sur chaque itinéraire possible, grâce au planificateur d'itinéraires;

c) on discrétise l'espace prédéterminé par des mailles de discrétisation, de largeur et/ou longueur prédéterminées, et on identifie le nombre d'utilisations de stations de recharge potentielles utilisées pour au moins un trajet possible, situées dans chaque maille de discrétisation ;

d) on choisit un nombre prédéfini N et on détermine les N mailles de discrétisation ayant le plus grand nombre d'utilisations de stations de recharge potentielles et ;

e) on définit la position du nombre prédéfini de stations de recharges effectives comme un point de chaque maille de discrétisation du nombre prédéfini de mailles de discrétisation ; et dans lequel au moins les étapes b) à e) sont mises en œuvre par des moyens informatiques et de préférence où toutes les étapes sont mises en œuvre par des moyens informatiques.

De préférence, à l'étape a), on détermine dans l'espace prédéterminé un nombre prédéterminé d'emplacements et on définit les trajets possibles, chaque trajet possible étant défini par un trajet rejoignant deux emplacements déterminés distincts, l'un des deux emplacements déterminés distincts étant l'origine du trajet possible considéré et l'autre étant la destination du trajet possible considéré.

Avantageusement, on acquiert, au moyen d'un système d'enregistrement en ligne, des données sur les villes de l'espace prédéterminé pour choisir les emplacements, les données étant de préférence la population totale des villes et/ou leur capacité hôtelière, pour déterminer lesdits emplacements.

Selon une configuration de l'invention, les différents emplacements sont distants deux à deux d'au moins un certain critère, de préférence d'au moins 20km, et de manière encore préférée, d'au moins 40 km.

De manière avantageuse, on choisit un nombre défini d'emplacements, le nombre défini d'emplacements étant inférieur à 200, et de préférence inférieur à 100.

Préférentiellement, le planificateur d'itinéraires réalise au moins les étapes suivantes :

- on construit un graphe de routage à partir du réseau routier, les sommets du graphe de routage représentant les intersections de chaque portion de route et les arcs du graphe de routage représentant les portions de route,
- on positionne les stations de recharge potentielles sur le graphe de routage,
- on étend le graphe de routage en multipliant au moins certains arcs en fonction de paramètres prédéfinis, les paramètres prédéfinis comprenant la vitesse de circulation sur la portion de route considérée et/ou le niveau de recharge lors de l'arrêt à une station de recharge potentielle,
- on construit un modèle de consommation énergétique, le modèle énergétique définissant la consommation d'énergie du véhicule électrique en fonction de paramètres prédéterminés en prenant en compte les recharges éventuelles de la batterie du véhicule électrique,

- pour chaque trajet possible, on applique le modèle de consommation énergétique sur les différents arcs du graphe routage étendu à chaque itinéraire possible de chaque trajet possible, et on définit comme itinéraire final du trajet possible, l'ensemble des arcs permettant de minimiser, par un algorithme d'optimisation tel qu'un algorithme du plus court chemin de Bellman-Ford, le temps de parcours, ou la consommation d'énergie ou un compromis défini comme un poids relatif entre ces deux paramètres,
- on détermine, à partir de l'itinéraire final défini, les positions des stations recharge potentielles utilisées et le niveau de recharge réalisé à chaque station de recharge potentielle utilisée pour le trajet possible considéré.

Selon une variante de l'invention, les portions de route prennent en compte la topographie du réseau routier, notamment la pente de la portion de route, l'infrastructure et la signalisation au moyen d'un système d'information géographique, les données de trafic au moyen d'un système de géolocalisation ou d'un système d'information géographique et de préférence les données météorologiques au moyen d'un système d'interface de programmation d'application. Avantageusement, on acquiert une mesure, sur chaque portion de route du réseau routier, du profil de vitesse de plusieurs véhicules, au moyen d'un système de géolocalisation ou d'un téléphone embarqué pour déterminer, d'une part la vitesse moyenne des véhicules sur la portion de route, et d'autre part la probabilité d'arrêt des véhicules à la fin de la portion de route considérée, la probabilité d'arrêt étant déterminée par le pourcentage de véhicule pour lequel un arrêt est considéré à la fin de la portion de route, l'arrêt du véhicule étant considéré si, sur au moins un point de mesure de la deuxième moitié de la portion de route, une vitesse du véhicule est inférieure à une valeur prédéfinie, la valeur prédéfinie étant de préférence inférieure ou égale à 10 km/h.

Selon une mise en œuvre de l'invention, une fois la position du nombre prédéfini de stations de recharge effectives définie à l'étape e), on réitère l'étape b), pour chaque trajet possible, en considérant seulement la position définie du nombre prédéfini de stations de recharge effectives au lieu des stations de recharge potentielles, et on détermine le pourcentage de trajets réalisables, parmi tous les trajets possibles, pour le véhicule électrique, le trajet étant réalisable si le véhicule électrique peut effectuer le trajet sans décharger totalement sa batterie, le trajet étant non-réalisable dans le cas contraire.

De préférence, on répète les étapes du procédé pour différents nombres prédéfinis de stations de recharge effectives, et on détermine différents pourcentages de trajets réalisables pour choisir un nombre prédéfini final de stations de recharge effectives.

L'invention concerne aussi un produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé tel que décrit précédemment, lorsque ledit programme est exécuté sur un ordinateur, un téléphone portable ou un appareil informatique.

L'invention concerne également un procédé de construction de stations de recharge dans un espace prédéterminé, dans lequel on réalise les étapes du procédé de positionnement de stations de recharge tel que décrit et dans lequel, une fois toutes les étapes du procédé de positionnement réalisé, on construit les stations de recharge aux positions définies dans l'espace prédéterminé.

### Liste des figures

D'autres caractéristiques et avantages du procédé et/ou du produit selon l'invention, apparaîtront à la lecture de la description ci-après d'exemples non limitatifs de réalisations, en se référant aux figures annexées et décrites ci-après.

La figure 1 représente une première variante de la méthode de positionnement des stations de recharge pour véhicules électriques selon l'invention.

La figure 2 représente une deuxième variante de la méthode de positionnement des stations de recharge pour véhicules électriques selon l'invention.

La figure 3 représente des emplacements et des trajets définis pour la recherche optimale des positions des stations de recharge selon l'invention.

La figure 4 représente un exemple de planificateur d'itinéraires adapté à la méthode de positionnement des stations de recharge pour véhicules électriques selon l'invention.

La figure 5 représente un exemple de profil de vitesse du véhicule électrique sur une portion de route pour la détermination de la probabilité d'arrêt à la fin de la portion de route, selon l'invention.

La figure 6 représente une détermination des emplacements pour un exemple d'application de la méthode de positionnement des stations de recharge pour véhicules électriques selon l'invention.

La figure 7 représente le positionnement de toutes les stations de recharge potentielles pour l'exemple d'application de la figure 6, de la méthode de positionnement des stations de recharge pour véhicules électriques selon l'invention.

La figure 8 représente une comparaison des stations de recharge réelles existantes et des stations de recharge issues de la méthode de positionnement selon l'invention pour les emplacements de la figure 6 et selon une première variante.

La figure 9 représente une comparaison des stations de recharge réelles existantes et des stations de recharge issues de la méthode de positionnement selon l'invention pour les emplacements de la figure 6 et selon une deuxième variante.

La figure 10 représente une comparaison des stations de recharge réelles existantes et des stations de recharge issues de la méthode de positionnement selon l'invention pour les emplacements de la figure 6 et selon une troisième variante.

**Description des modes de réalisation**

L'invention concerne un procédé de positionnement de stations de recharge pour véhicules électriques dans un espace prédéterminé donné comprenant un réseau routier pour construire des stations de recharge dans l'espace prédéterminé (un territoire donné physique correspondant à l'espace prédéterminé, il peut s'agir par exemple, d'un pays, d'une région, d'un département, etc.). En positionnant et en construisant des stations de recharge à des endroits pertinents, on peut améliorer le service de recharge des véhicules électriques et ainsi améliorer les temps de trajet en véhicule électrique d'une part et permettre plus de trajets possibles en véhicules électriques d'autre part.

Le but de l'invention consiste ainsi à déterminer des positions de l'infrastructure des stations de recharge pour véhicules électriques sur un territoire en utilisant par exemple des données statistiques d'usage et d'attractivité des zones géographiques. Cette méthode utilise notamment un planificateur d'itinéraires pour véhicules électriques estimant avec précision la consommation énergétique du véhicule électrique, la localisation des besoins de recharge et le niveau de recharge nécessaire.

Il s'agit donc d'une solution pour faire évoluer l'offre de stations de recharge sur un territoire donné. En effet, certains trajets actuels sont actuellement difficiles, voire impossibles, en véhicules électriques compte tenu des positions des stations de recharge actuelles par exemple.

Au sens de l'invention, les « stations de recharge » (aussi appelées « bornes de recharge ») concernent des stations de recharge pour véhicules électriques, plus précisément pour recharger les batteries des véhicules électriques.

Un véhicule électrique s'entend d'un véhicule comprenant uniquement un moteur électrique alimenté en énergie par une batterie. En d'autres termes, ce véhicule n'a pas de moteur à combustion interne, tel qu'un moteur essence ou un moteur Diesel ou un moteur à hydrogène. Le réseau routier comprend des portions de route (aussi appelées segments de route) reliées entre elles par des intersections (ou carrefours). Les intersections peuvent ainsi correspondre à des points du réseau routier et les portions de route à des arcs reliant les points du réseau routier.

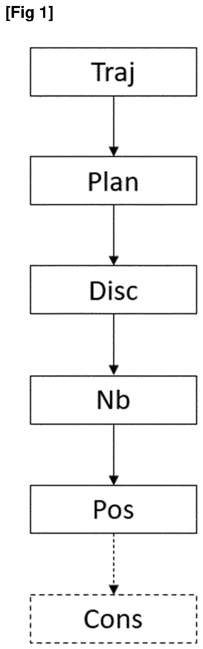

La figure 1 illustre, de manière schématique et non limitative, une première variante d'une méthode de positionnement de stations de recharge selon l'invention.

La méthode de positionnement comprend au moins les étapes suivantes:

a) on définit (Traj) des trajets possibles dans l'espace prédéterminé, chaque trajet possible partant d'une origine et arrivant à une destination.

b) on utilise (Plan) un planificateur d'itinéraires pour déterminer au moins un itinéraire possible pour chaque trajet possible, chaque itinéraire possible étant défini par une succession de portions de route, et en supposant que chaque intersection comprend une station de recharge potentielle, et on détermine le temps de parcours pour parcourir l'itinéraire possible par un véhicule électrique et/ou la consommation d'énergie par le véhicule électrique de chaque itinéraire possible ainsi que la position des stations de recharge potentielles utilisées par le véhicule électrique sur chaque itinéraire possible, grâce au planificateur d'itinéraires;

c) on discrétise (Disc) l'espace prédéterminé par des mailles de discrétisation, de largeur et/ou longueur prédéterminées, et on identifie le nombre d'utilisations de stations de recharge potentielles utilisées pour au moins un trajet possible, situées dans chaque maille de discrétisation ;

d) on détermine (Nb) un nombre prédéfini de mailles de discrétisation correspondant au nombre prédéfini de mailles de discrétisation ayant le plus de stations de recharge potentielles utilisées.

e) on définit (Pos) la position du nombre prédéfini de stations de recharges effectives comme un point de la chaque maille de discrétisation parmi le nombre prédéfini de mailles de discrétisation déterminée à l'étape d).

En outre, la figure 1 comprend une autre étape facultative qui consiste à construire (Cons) les stations de recharges effectives aux positions définies à l'étape e) dans l'espace prédéterminé (sur le territoire donné physique correspondant à l'espace prédéterminé). Cette étape facultative est matérialisée par les traits pointillés.

Le nombre prédéfini peut être choisi en fonction de différents critères : taux de couverture des trajets réalisables en véhicules électriques, coût d'investissements, type de véhicule électrique considéré (taille de la batterie, consommation énergétique par exemple).

Ainsi, pour des trajets choisis spécifiquement et un véhicule électrique type (taille et type de batterie connus, consommation énergétique du véhicule en fonction de différents paramètres connue), la méthode permet de manière simple et rapide, d'identifier les positions intéressantes (pertinentes) pour la construction de stations de recharge sur le territoire.

En outre, au moins les étapes b) à e) sont mises en œuvre par des moyens informatiques (ordinateur ou serveur par exemple) et de préférence toutes les étapes sont mises en œuvre par des moyens informatiques. Ainsi, le procédé peut être implémenté facilement dans un ordinateur ou un serveur.

**Etape a) de définition des trajets possibles dans l'espace prédéterminé**

Les trajets possibles peuvent correspondre par exemple aux trajets les plus utilisés (de manière générale, en tenant compte de tous les véhicules et pas seulement des véhicules électriques), les plus probables ou ceux reliant les plus grandes villes. Les « origine » et « destination » correspondant à des points du réseau routier. Chaque trajet possible correspond ainsi à un couplet Origine-Destination et chacun de ces trajets possibles est orienté. Par exemple, le trajet Origine-Destination, qui concerne le trajet partant d'Origine et arrivant à Destination est différent du trajet Destination-Origine qui part de Destination et qui arrive à Origine.

Selon une variante de l'invention, à l'étape a), on peut déterminer dans l'espace prédéterminé un nombre prédéterminé d'emplacements et on peut définir les trajets possibles à partir de ces emplacements.

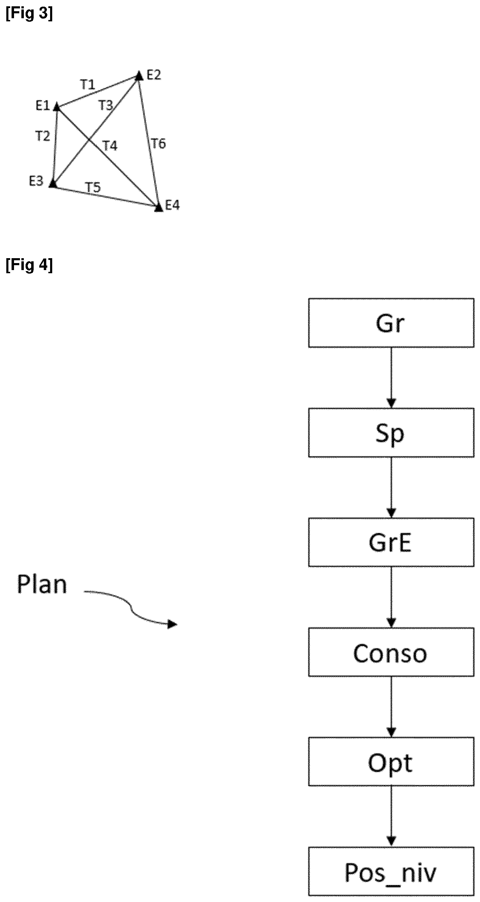

La figure 3 illustre, de manière schématique et non limitative, un exemple d'emplacements et de trajets possibles pour la méthode de positionnement des stations de recharge selon l'invention.

Dans l'espace prédéterminé représenté sur la figure 3, quatre emplacements E1, E2, E3 et E4 ont été retenus. Bien entendu, un nombre différent d'emplacements pourrait être utilisé. Les paires de trajets possibles sont représentés par T1, T2, T3, T4 et T5. La paire de trajets possibles T1 relie E1 et E2 (un trajet possible de E1 vers E2 et un trajet possible de E2 vers E1).

La paire de trajets possibles T2 relie E1 et E3 (un trajet possible de E1 vers E3 et un trajet possible de E3 vers E1).

La paire de trajets possibles T3 relie E3 et E2 (un trajet possible de E3 vers E2 et un trajet possible de E2 vers E3).

La paire de trajets possibles T4 relie E1 et E4 (un trajet possible de E1 vers E4 et un trajet possible de E4 vers E1).

La paire de trajets possibles T5 relie E3 et E4 (un trajet possible de E3 vers E4 et un trajet possible de E4 vers E3).

La paire de trajets possibles T6 relie E2 et E4 (un trajet possible de E2 vers E4 et un trajet possible de E4 vers E2).

Ainsi, les trajets possibles comprennent tous les trajets reliant deux emplacements distincts deux à deux.

Par emplacements, on entend par exemple un point ou une position, comme une coordonnée de géolocalisation (par exemple GPS de l'anglais « Global Positionning System » signifiant système de navigation global, ou Galiléo). Un emplacement peut correspondre à une ville ou à un repère géographique particulier (un lieu touristique par exemple).

Chaque trajet possible peut ainsi être défini par un trajet rejoignant deux emplacements déterminés distincts (par exemple, un trajet peut rejoindre deux villes distinctes), l'un des deux emplacements déterminés distincts étant l'origine du trajet possible considéré et l'autre étant la destination du trajet possible considéré. Ainsi, on peut déterminer des trajets rejoignant des emplacements particuliers, où les déplacements à destination partant ou arrivant vers ces emplacements particuliers sont nombreux. Cela permet à la méthode d'être plus fiable et plus pertinente pour le positionnement des stations de recharge et leur construction éventuelle. De préférence, on peut acquérir (ou mesurer ou enregistrer), au moyen d'un système d'enregistrement en ligne ou d'une base de données (de préférence en libre accès), telle que la base INSEE (de l'Institut National de la Statistique et des Etudes Economiques), des données sur les villes (ou lieux touristiques) de l'espace prédéterminé pour choisir les emplacements. Ces données peuvent notamment comprendre la population totale des villes (ainsi, on peut choisir les villes les plus importantes en termes de population et donc d'utilisateurs de véhicules électriques) et/ou leur capacité hôtelière (en effet, la capacité hôtelière traduit directement l'intérêt touristique, commercial ou industrielle de la ville et est liée à des déplacements depuis ou vers d'autres villes), pour déterminer lesdits emplacements. Ainsi, les trajets possibles correspondent aux trajets susceptibles d'être les plus utilisables et donc les plus pertinents pour le positionnement et la construction des stations de recharge. De plus, cette méthode permet de ne pas utiliser les données actuelles des trajets en véhicules électriques, qui pourrait donner des résultats erronés, car ces données actuelles des trajets en véhicules électriques ne tiennent pas compte des trajets non réalisables ou difficilement réalisables aujourd'hui en véhicule électrique compte tenu du manque actuel de stations de recharge.

Avantageusement, les différents emplacements peuvent être distants deux à deux d'au moins un certain critère, de préférence d'au moins 20km, et de manière encore préférée, d'au moins 40 km. En effet, on ne tient pas compte ici de villes trop proches, telles que des villes d'une même mégalopole. De plus, une distance entre deux emplacements inférieure au critère n'est pas très pertinente, par exemple car le trajet entre ces deux emplacements peut se faire sans station de recharge. Ainsi, en supprimant une partie des emplacements trop proches les uns des autres, la méthode reste fiable et précise, tout en permettant un résultat plus rapide et en nécessitant moins de mémoire pour les moyens informatiques.

Préférentiellement, on peut choisir un nombre défini d'emplacements, le nombre défini d'emplacements étant inférieur à 200, et de préférence inférieur à 100. Ainsi, on peut limiter la mémoire des moyens informatiques et le temps de calcul et se concentrer sur les principaux trajets et donc les stations de recharge les plus intéressantes à positionner et à construire.

**Etape b) de planification d'itinéraires**

On utilise un planificateur d'itinéraires pour déterminer au moins un itinéraire possible pour chaque trajet possible, chaque itinéraire possible étant défini par une succession de portions de route du réseau routier permettant le trajet possible concerné de l'origine vers la destination. Le planificateur d'itinéraires est utilisé en supposant que chaque intersection comprend une station de recharge potentielle. Le planificateur d'itinéraires peut notamment comprendre un GPS (pour « Global Positionning System » signifiant système de navigation global) ou un téléphone portable pour connaître la position du véhicule concerné et il peut également comprendre un logiciel apte à déterminer un trajet possible d'une origine vers une destination en fonction de différents paramètres (temps de trajet, consommation d'énergie, type de véhicule, types de routes, vitesse de déplacement etc...) En d'autres termes, on considère qu'on peut positionner une station de recharge potentiellement à chaque intersection du réseau routier. Par conséquent, un trajet peut se réaliser en prévoyant une éventuelle recharge de la batterie à au moins une intersection.

Le planificateur d'itinéraires permet de déterminer le temps de parcours (ou temps de trajet) pour parcourir l'itinéraire possible (via les portions de route de cet itinéraire) par un véhicule électrique et/ou la consommation d'énergie par le véhicule électrique de chaque itinéraire possible (sur les portions de route de cet itinéraire).

Le planificateur d'itinéraires permet aussi, pour chaque itinéraire possible, d'identifier, parmi les stations de recharge potentielles (à chaque intersection du réseau routier), lesquelles sont utilisées par le véhicule électrique pour recharger la batterie du véhicule électrique. Il permet aussi de déterminer le niveau de recharge de la batterie à atteindre. En d'autres termes, le planificateur d'itinéraires tient compte du temps de recharge en fonction du niveau de recharge : la batterie n'est pas systématiquement rechargée à 100% à chaque station de recharge. En effet, le temps de rechargement de la batterie n'est pas linéaire et le planificateur cherche le meilleur compromis entre niveau de recharge et temps de rechargement.

Selon une configuration de l'invention et tel qu'illustré à la figure 4, de manière schématique et non limitative, le planificateur d'itinéraires peut réaliser au moins les étapes suivantes :

- on peut construire (Gr) un graphe de routage à partir du réseau routier, les sommets du graphe de routage représentant les intersections de chaque portion de route et les arcs du graphe de routage représentant les portions de route. En d'autres termes, le graphe de routage représente le réseau routier du territoire considéré (de l'espace prédéterminé).

- on peut positionner (Sp) les stations de recharge potentielles sur le graphe de routage. En d'autres termes, à l'étape b), on suppose que les stations de recharge potentielles sont situées sur tous les sommets du graphe de routage (à chaque intersection de chaque portion de route).

- on peut étendre (GrE) le graphe de routage en multipliant au moins certains arcs en fonction de paramètres prédéfinis, les paramètres prédéfinis comprenant la vitesse de circulation sur la portion de route considérée et/ou le niveau de recharge lors de l'arrêt à une station de recharge potentielle. Chaque arc du graphe étendu correspond ainsi à un déplacement le long de chaque portion de route avec un ou plusieurs paramètres distincts : par exemple, plusieurs vitesses de déplacement différentes et/ou plusieurs niveaux de recharge différents pour chaque arc reliant deux mêmes sommets.

- on peut construire (Conso) un modèle de consommation énergétique, le modèle énergétique définissant la consommation d'énergie du véhicule électrique (un véhicule électrique type pour lequel le type et la taille de la batterie sont connus et la consommation énergétique est également connue) en fonction de paramètres prédéterminés en prenant en compte les recharges éventuelles de la batterie du véhicule électrique. Ainsi, à chaque point de l'itinéraire, on peut connaître, grâce au planificateur d'itinéraire, le niveau de charge de la batterie.

- pour chaque trajet possible, on peut appliquer le modèle de consommation énergétique sur les différents arcs du graphe routage étendu à chaque itinéraire possible de chaque trajet possible, et on peut définir comme itinéraire final du trajet possible, l'ensemble des arcs (d'un des itinéraires possibles du trajet possible) permettant de minimiser (Opt), par un algorithme d'optimisation tel qu'un algorithme du plus court chemin de Bellman-Ford, le temps de parcours, ou la consommation d'énergie ou un compromis défini comme un poids relatif entre ces deux paramètres. L'algorithme permet de minimiser le temps de parcours ou la consommation d'énergie ou de trouver un mix entre ces deux paramètres.

- on peut déterminer (Pos_niv), à partir de l'itinéraire final défini, les positions des stations recharge potentielles utilisées et le niveau de recharge réalisé à chaque station de recharge potentielle utilisée pour le trajet possible considéré (sur l'itinéraire final défini). Ainsi, l'utilisateur sait quelles stations de recharge sont à utiliser sur l'itinéraire et quel est le niveau de recharge à atteindre afin d'optimiser l'itinéraire.

Avantageusement, la première variable d'extension du graphe de routage peut être la vitesse de déplacement à adopter sur certaines portions de route le long de l'itinéraire afin de trouver le bon compromis entre le temps du trajet et la consommation énergétique. En d'autres termes, sur certaines portions de la route notamment à grande vitesse, il peut être intéressant de rouler à une vitesse inférieure à la vitesse moyenne du trafic ou à la vitesse maximale autorisée afin de réduire la consommation d'énergie, et donc de réduire la quantité d'énergie nécessaire pour effectuer le trajet, ce qui peut se traduire par une réduction du nombre d'arrêts pour recharger la batterie. Les portions de route concernées par cette réduction de vitesse peuvent être identifiées par exemple par une vitesse de déplacement moyenne supérieure à un certain seuil, pour identifier les portions d'autoroute par exemple. Ainsi, on multiplie le graphe de chaque portion de route concernée par autant de vitesse moyenne envisagée pour cette portion de route. Par exemple, on peut envisager plusieurs réductions de vitesse possibles par rapport à la vitesse du trafic ou à la vitesse maximale autorisée. Avantageusement, les réductions de vitesse envisagées dans le planificateur d'itinéraires peuvent être de 0, 5, 10 et 15km/h. Ainsi, chaque arc des portions de route concernée est multiplié par quatre arcs dans le graphe de routage étendu correspondant aux choix des réductions de vitesse envisagées possibles.

Additionnellement ou alternativement, la deuxième variable d'extension du graphe de routage peut être le niveau de recharge à chaque station de recharge potentielle. Par conséquent, le graphe de routage peut être étendu pour contenir autant de copies des arcs sortants des sommets correspondant à une station de recharge potentielles que de niveaux prédéfinis de récupération d'énergie de la batterie pendant la charge. Par exemple, les niveaux de recharge autorisés peuvent correspondre à {0,10,20, ...,100}%, avec un pas de 10%. Ainsi, chaque arc sortant des sommets des stations de recharge potentielles dans le graphe de routage étendu est multiplié par onze arcs dans le graphe de routage étendu pour toutes les valeurs prédéfinies possibles de niveau de recharge.

Avantageusement, les portions de route peuvent prendre en compte la topographie du réseau routier, notamment la pente de la portion de route, l'infrastructure et la signalisation au moyen d'un système d'information géographique (SIG), les données de trafic au moyen d'un système de géolocalisation, tel qu'un GPS, ou d'un système d'information géographique (SIG) et de préférence les données météorologiques au moyen d'un système d'interface de programmation d'application (une API qui signifie « application programming interface » en anglais).

La prise en compte de la pente impacte directement la consommation d'énergie.

La prise en compte des infrastructures routières et de signalisation permet de tenir compte des feux de signalisation, des panneaux « cédez le passage » ou « stop » où un arrêt peut avoir lieu, des limitations de vitesse ou des ralentisseurs par exemple. Tous ces éléments peuvent impacter la vitesse moyenne et le profil de vitesse sur une portion de route.

Par profil de vitesse, on entend la variation des vitesses instantanées le long de la portion de route. Le profil de vitesse peut se représenter par une courbe de la vitesse instantanée en fonction de la distance le long de la portion de route. Le profil de vitesse tient ainsi compte des accélérations et décélérations qui peuvent se produire sur la portion de route, ce que ne permet pas la seule information de la vitesse moyenne. Ce profil de vitesse peut notamment être établi à partir de mesures des véhicules, électriques ou non, se déplaçant sur le réseau routier. Par exemple, ce profil de vitesse peut être établi à partir des données issues de l'application Geco air® (IFP Energies nouvelles, France) qui enregistre les vitesses des usagers sur les portions de route. Geco air® est une application pour réduire la pollution liée aux déplacements et pour ce faire, elle collecte les données de position et de vitesses instantanées.

Les données de trafic permettent la prise en compte de la densité du trafic et son impact sur la vitesse moyenne. Les données de trafic peuvent notamment correspondre à la vitesse moyenne et/ou la durée de trajet des véhicules sur la portion du réseau routier par tranches horaires, par exemple toutes les dix minutes. Pour cela, on peut par exemple mesurer la vitesse moyenne au cours de la journée, de préférence sur plusieurs jours. Ainsi, on peut récupérer un historique du trafic et sa variation journalière enregistrés au cours de la journée. En appliquant les données de trafic, on peut évaluer plus précisément le temps de parcours et/ou la consommation énergétique en fonction du jour et de l'horaire considéré et/ou en fonction des données de trafic en temps réel.

Les données météorologiques, notamment de températures, sont également intéressantes pour la détermination de la consommation énergétique si le chauffage ou la climatisation du véhicule sont activés. Pour ce faire, on peut utiliser une API météo REST, comme l'API de « Météo France ™», pour récupérer les conditions météorologiques en temps réel au départ et les mettre à jour régulièrement le long de l'itinéraire, par exemple à des intervalles de temps (notamment toutes les heures) ou d'espace (par exemple, tous les 60 km) fixes. Des méthodes d'interpolation peuvent ensuite être utilisées pour obtenir des informations météorologiques sur chaque portion de route. La température ambiante peut être obtenue pour chaque portion de route en interpolant les prévisions de température obtenues de l'API météo.

La topographie peut être supposée être invariante dans le temps, ou varier dans le temps. Par conséquent, ces données peuvent être stockées hors ligne sur des bases de données locales pour un calcul d'itinéraire en ligne plus rapide. Pour alimenter une telle base de données hors ligne, on peut par exemple utiliser les services web REST (« Representational State Transfer », signifiant Transfert de la Représentation d'Etats) de fournisseurs de données cartographiques et de localisation, par exemple HERE Maps.

Chaque portion de route peut également être classée en fonction de sa topologie, notamment avec une classe "fonctionnelle" associée, allant par exemple de 1 pour les autoroutes principales à 5 pour les rues urbaines secondaires. En outre, chaque portion de route peut être définie par un identifiant unique et par sa géométrie avec des coordonnées tridimensionnelles (au moins les coordonnées des deux extrémités de la portion de route). Les coordonnées peuvent de préférence être exprimées en latitude, longitude et altitude au-dessus du niveau de la mer. Enfin, le type d'intersection et/ou de signalisation à l'extrémité avale de chaque portion de route peut également être récupéré : on peut notamment prendre en compte les types d'infrastructure routière et de signalisation comme les feux de signalisation, les panneaux d'arrêt, les panneaux de céder le passage, les ronds-points et les postes de péage.

Selon une configuration de l'invention, on peut acquérir une mesure (ou mesurer), sur chaque portion de route du réseau routier, du profil de vitesse de plusieurs véhicules, au moyen d'un système de géolocalisation ou d'un téléphone embarqué pour déterminer, d'une part, la vitesse moyenne des véhicules sur la portion de route, et d'autre part la probabilité d'arrêt des véhicules à la fin de la portion de route considérée, la probabilité d'arrêt étant déterminée par le pourcentage de véhicules pour lequel un arrêt est considéré à la fin de la portion de route, l'arrêt du véhicule étant considéré si, sur au moins un point de mesure de la deuxième moitié de la portion de route, une vitesse du véhicule est inférieure à une valeur prédéfinie, la valeur prédéfinie étant de préférence inférieure ou égale à 10 km/h. De ce fait, on tient compte des statistiques d'arrêt à la fin de la portion de route, par exemple en raison d'un feu de signalisation, d'un panneau « stop » ou « cédez-le-passage », d'un péage d'autoroute. Lorsque l'arrêt se produit, il impacte directement le profil de vitesse, la vitesse moyenne sur la portion de route et donc il exerce une influence sur le temps de parcours et sur la consommation énergétique du véhicule.

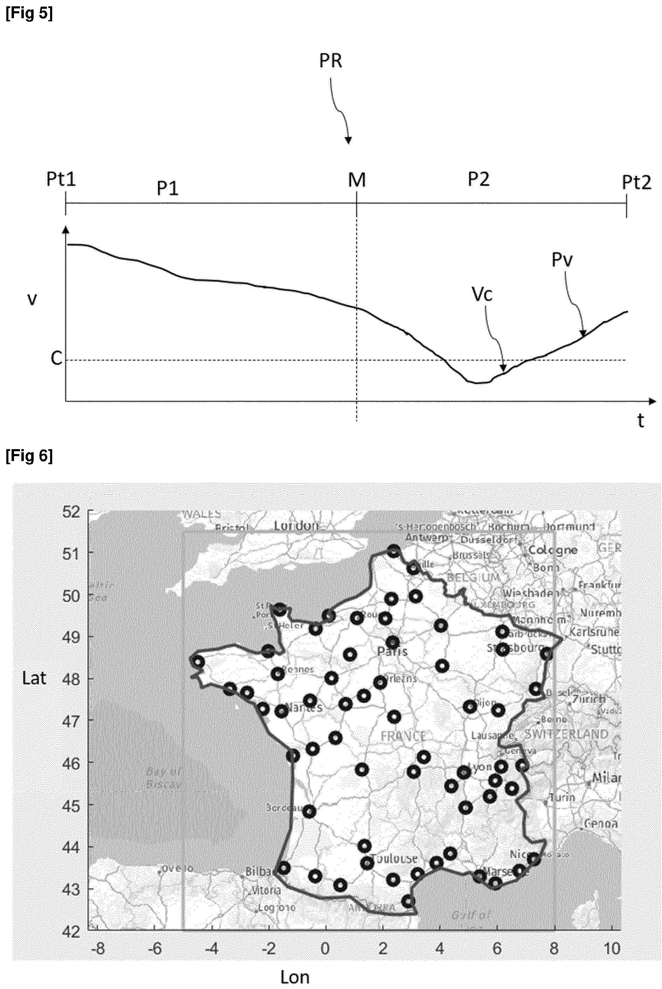

La figure 5 illustre, de manière schématique et non limitative, un exemple de profil de vitesse d'un véhicule utilisé pour déterminer la probabilité d'arrêt.

Sur cette figure, la courbe noire illustre le profil de vitesse Pv du véhicule sur une portion de route PR. Ce profil de vitesse Pv définit la vitesse instantanée v du véhicule au cours du temps t en allant de l'intersection Pt1 à l'intersection Pt2. La portion de route PR comprend une première moitié P1 et une deuxième moitié P2, en aval de P1 dans le sens de circulation du véhicule sur la portion de route PR. Le point M représente le milieu de la portion de route PR et correspond donc au point séparant la première moitié P1 de la deuxième moitié P2.

Le profil de vitesse Pv montre des vitesses instantanées variables le long de la portion de route PR. Notamment, une partie Vc du profil de vitesse Pv comprend des vitesses instantanées inférieures au critère C. Dans ce cas, comme au moins une vitesse instantanée de la partie Vc située sur la deuxième partie P2 de la portion de route T1 est inférieure au critère prédéfini C, on considère que ce véhicule s'arrête dans la deuxième portion P2 de la portion de route PR.

Avantageusement, le type d'intersection et/ou de signalisation peut être utilisé pour déterminer la probabilité d'arrêt (c'est-à-dire que la vitesse du véhicule passe à zéro) à l'élément d'infrastructure correspondant. Cette probabilité d'arrêt peut alors remplacer la vitesse moyenne du trafic et être utilisée pour affiner le comportement de conduite prédit. Un tel modèle probabiliste simple peut être obtenu par une méthode de classification mettant en relation le comportement d'arrêt avec le type d'intersection, la classe fonctionnelle de la portion de route considérée et l'heure de la journée afin de saisir l'impact du trafic de pointe et hors pointe.

Selon une mise en œuvre avantageuse de l'invention, le planificateur d'itinéraire peut comprendre un modèle de temps de parcours, c'est-à-dire un modèle pour estimer le temps nécessaire pour parcourir une portion de route.

L'estimation du temps de parcours sur un arc du graphe peut être issue de l'API de routage, par exemple en fonction des conditions de trafic en temps réel, ce temps de parcours étant noté $\overline{T}_i$. Sur les arcs où la vitesse est réduite par rapport à la vitesse moyenne de circulation $\overline{V}_i$ (ou par rapport à la vitesse maximale autorisée), le temps de parcours $\overline{T}_{i,v}$ augmente par rapport à $\overline{T}_i$ et peut être calculé comme suit :

$$\overline{T}_{i,v} = \overline{T}_i + \delta_v \frac{L_i}{\overline{V}_i(\overline{V}_i - \delta_v)}$$

Avec $L_i$ la longueur de la portion de route et $\delta_v$ la réduction de la vitesse considérée sur la portion de route par rapport à la vitesse moyenne de circulation.

Additionnellement ou alternativement, sur les arcs où se produisent une recharge de la batterie du véhicule au niveau d'une station de recharge, l'estimation du temps de parcours $\overline{T}_{i,c}$ peut également tenir compte de plusieurs contributions comme suit :

$$\overline{T}_{i,c} = \begin{cases} \overline{T}_i, & si\ \delta_c = 0 \\ \overline{T}_i + T_d + T_s + T_c, & si\ \delta_c > 0 \end{cases}$$

Où le temps de parcours issu de l'API de routage $\overline{T}_i$ pourrait être remplacé par $T_{i,v}$ pour tenir compte de la réduction de vitesse souhaitée sur l'arc considéré si, sur l'arc, il y a une option de réduction de vitesse comme discuté précédemment

Et où le deuxième terme $T_d$ est le temps de détour nécessaire pour atteindre l'emplacement du chargeur hors route. Ce terme dépend de la distance du sommet le plus proche du graphe de routage et de la vitesse moyenne supposée du détour.

Le troisième terme $T_s$ est constant et représente le temps passé après l'arrêt du véhicule pour interagir avec le chargeur et préparer la charge.

Le quatrième terme $T_c$ correspond au temps de charge réel, qui dépend l'état de charge initial de la batterie au début de la charge, de l'état de charge final, qui n'est pas nécessairement de 100% comme expliqué précédemment, de la capacité de la batterie et de la puissance du chargeur.

$\delta_c$ est le niveau de recharge sur la portion de route considérée.

Afin d'estimer correctement le temps de charge $T_c$, un modèle simple inspiré de la méthode de recharge CC-CV (« constant-current constant-voltage » pour courant constant -tension constante), avec une phase de précharge lorsque la capacité de la batterie est faible, tel que celui décrit dans le document « F. A. V. Pinto, L. H. M. K. Costa, and M. D. de Amorim, "Modeling Spare Capacity Reuse in EV Charging Stations based on the Li-ion Battery Profile," in International Conference on Connected Vehicles and Expo (ICCVE), 2014, pp. 92-98 », peut être utilisé.

Avantageusement, le planificateur d'itinéraire peut également comprendre un modèle de pilotage. Afin d'estimer avec précision la consommation d'énergie nécessaire au déplacement sur un arc du graphe de routage, la première étape consiste à prédire le comportement du conducteur sur la portion de route, afin de prévoir la demande de puissance de traction du véhicule. On peut utiliser par exemple un modèle tel que l'« Intelligent Driver Model » (IDM pouvant être traduit par modèle de conducteur intelligent) décrit dans le document « M. Treiber, A. Hennecke, and D. Helbing, "Congested Traffic States in Empirical Observations and Microscopic Simulations," Physical Review E, vol. 62, pp. 1805-1824, 2000 » pour générer des profils de vitesse synthétiques attendus sur chaque arc du graphe de routage, en fonction des données dynamiques du trafic. Ce modèle est un modèle de suivi de voiture qui décrit la dynamique de la position et de la vitesse des véhicules en interaction avec les véhicules précédents. Dans un cadre de planification d'itinéraire selon l'invention, comme il n'est pas possible de connaître précisément à l'avance le comportement des véhicules précédents le véhicule pour lequel l'itinéraire est optimisé pour la méthode selon l'invention, ce modèle peut être adapté pour être utilisé pour un véhicule sans interaction avec les véhicules précédents réels. Pour ce faire, on détermine la probabilité d'arrêt à la fin de la portion de route, tel que décrit précédemment dans cette description, et on suppose alors qu'un véhicule précédent virtuel apparaît pour perturber la vitesse du véhicule pour lequel l'itinéraire est calculé. On peut par exemple utiliser les données de l'application Geco air ® pour cela. La présence de ce véhicule précédent virtuel force une transition de vitesse vers une vitesse nulle, forçant ainsi l'arrêt à la fin de la portion de route considérée. Au contraire, lorsque la probabilité d'arrêt ne traduit pas un arrêt à la fin de la portion de route considérée, le véhicule pour lequel l'itinéraire est calculé atteint la vitesse moyenne de la portion de route suivante.

La dynamique de la vitesse dépend des conditions aux limites de la portion de route du réseau routier considéré, et en particulier de la présence d'un événement d'arrêt à l'extrémité (intersection) amont et/ou aval de cette portion de route. Si aucun d'arrêt n'est prévu à l'extrémité (intersection) avale de la portion de route, seul le terme de route libre apparaît dans la dynamique de la vitesse :

$$\dot{x}(t) = v(t)$$

$$\dot{v}(t) = a\left(1 - \left(\frac{v(t)}{V_T}\right)^\gamma\right) = \dot{v}_{free}$$

Où $a$ est l'accélération maximale du véhicule, v la vitesse du véhicule et x sa position, $\gamma$ peut être considéré comme un paramètre de réactivité du conducteur, et $V_T$ est la vitesse cible du véhicule.

$v_{free}$ correspond à la vitesse de route libre, c'est-à-dire sans arrêt à l'extrémité (intersection) avale de la portion de route.

La vitesse cible $V_T$ peut être fixée en fonction de la longueur $L_i$ de la portion de route et de la position du véhicule pour lequel l'itinéraire est calculé comme suit :

$$V_T = \begin{cases} \overline{V}_i, & if \ x(t) < \max\{0, L_i - d_h\} \\ \overline{V}_{i+1}, & if \ x(t) \geq \max\{0, L_i - d_h\} \end{cases}$$

Où $\overline{V}_i$ est la vitesse moyenne de déplacement sur l'arc $i$, $\overline{V}_{i+1}$ est la vitesse de déplacement sur l'arc suivant $i + 1$, $d_h$ est la longueur de l'horizon de prédiction du conducteur, c'est-à-dire un paramètre qui indique la distance à partir de laquelle le conducteur commence à cibler la vitesse de la portion de route suivante.

De plus, la vitesse initiale peut être fixée à zéro s'il y a une probabilité d'arrêt à la fin de l'arc (de la portion de route) amont, et à $\overline{V}_i$ sinon.

D'autre part, si un arrêt est prédit à l'intersection avale de la portion de route, la dynamique de la vitesse peut également inclure un terme d'interaction et un véhicule précédent virtuel peut être supposé influencer le comportement du véhicule pour lequel l'itinéraire peut être calculé, comme suit :

$$\dot{v}(t) = \dot{v}_{free} - a\left(\frac{d_0 + v(t)T_h}{x(t)} + \frac{v(t)(v(t) - v_l)}{2\sqrt{ab}x(t)}\right)^2,$$

où $d_0$ est l'inter-distance minimale par rapport au véhicule précédent virtuel, $T_h$ est la distance minimale par rapport au véhicule précédent virtuel, et b est une accélération de freinage prédéterminée. La vitesse du véhicule précédent virtuel $v_l$ peut être calculée comme suit :

$$v_l = \begin{cases} \overline{V}_{i+1}, & if \ x(t) < \max\{0, L_i - d_h\} \\ 0, & if \ x(t) \geq \max\{0, L_i - d_h\} \end{cases}$$

Si le véhicule précédent virtuel est arrêté ($v_l = 0$), le véhicule pour lequel l'itinéraire est calculé ne peut s'arrêter exactement à la fin de la portion de route, compte tenu du fait qu'on suppose que le véhicule précédent virtuel s'arrête à la fin de la portion et qu'on tient compte de l'inter-distance $d_0$ et de la longueur du véhicule lui-même.

Avantageusement, le planificateur d'itinéraire peut également comprendre un modèle de consommation énergétique.

La consommation d'énergie du véhicule électrique est calculée au moyen de sa dynamique et de la modélisation du groupe motopropulseur afin d'estimer précisément les pertes de l'entraînement électrique et de l'absorption de puissance auxiliaire. La force d'entraînement $F_w$ pour entraîner les roues du véhicule en rotation, pour une vitesse donnée $v(t)$ (c'est-à-dire la vitesse fournie par le modèle de pilotage décrit précédemment) peut être définie comme suit :

$$F_w(t) = m\dot{v}(t) + c_2 v(t)^2 + c_1 v(t) + c_0 + mg\sin\alpha$$

où m est la masse du véhicule, $g$ est l'accélération gravitationnelle, $\alpha$ est la pente de la route qui varie le long de la portion de route, et les coefficients $c_0$, $c_1$ et $c_2$ sont identifiés pour un véhicule électrique considéré. La force de la roue $F_w$ peut être convertie en puissance mécanique $P_m$ demandée au système de propulsion :

$$P_m(t) = F_w(t)v(t)\eta_t^{-sign(F_w(t))}$$

où $\eta_t$ est l'efficacité de la transmission.

Enfin, la consommation d'énergie $E_b$ de la batterie peut être définie comme suit :

$$E_b = \int_0^{t_f} P_m(t)\eta_b^{-sign(P_m(t))} + P_{aux} \, dt$$

où $\eta_b$ représente l'efficacité de la propulsion électrique, $t_f$ est le temps de parcours de la portion de route, et $P_{aux}$ est l'absorption de puissance auxiliaire le long de la portion de route. Par exemple, la demande d'énergie auxiliaire peut être supposée provenir principalement de la climatisation de l'habitacle ou des besoins de confort du conducteur, et elle peut être une fonction convexe de la température ambiante, disponible sur chaque portion de route.

Selon une variante de l'invention, l'algorithme d'optimisation peut être défini par un problème d'optimisation conçu pour trouver le meilleur compromis entre le temps de trajet et/ou la consommation d'énergie.

Le problème d'optimisation peut être formulé comme suit :

$$\min_{x_\zeta} \sum_{\zeta \in A^*} (\lambda \omega_t + (1 - \lambda)\omega_e)x_\zeta$$

$$s.t. \sum_{\zeta \in i^+} x_\zeta - \sum_{\zeta \in i^-} x_\zeta = \begin{cases} 1, & if\ i = i^o \\ -1, & if\ i = i^d \\ 0, & sinon \end{cases}$$

$$C_{min} \leq \sum_{\zeta \in \mathcal{P}_i} \omega_e \leq C, \forall i \in A'$$

$$x_\zeta \in \{0,1\}$$

Avec

$\zeta$ désignant les arcs d'un graphe linéaire $\mathcal{L}(\mathcal{G})$ obtenu à partir du graphe de routage étendu $\mathcal{G}$, le graphe linéaire possédant un sommet représentant chaque arc du graphe de routage étendu et chaque arc du graphe linéaire représentant une paire d'arcs adjacents du graphe de routage étendu.

$i^+$ l'ensemble des arcs $\zeta$ entrants,

$i^-$ l'ensemble des arcs $\zeta$ sortants,

$i^o$ l'arc d'origine,

$i^d$ l'arc de destination,

$\mathcal{P}_i$ l'itinéraire composé par tous les arcs $\zeta$ reliant l'origine $i^o$ à $i^d$,

$\omega_t$ le coût en temps,

$\omega_e$ le coût en énergie,

$x_\zeta$ la variable de décision qui est de 0 si l'arc concerné n'appartient pas à l'itinéraire ou de 1, s'il appartient à l'itinéraire

$\lambda$ le poids du compromis,

A' représentent l'ensemble des arcs du graphe de routage étendu,

$C_{min}$ : un état de charge minimal acceptable de la batterie

C : état de charge de la batterie

Ainsi, le problème d'optimisation est une fonction objectif qui s'écrit comme une somme pondérée des coûts en temps $\omega_t$ et coûts en énergie $\omega_e$ sur chaque arc du graphe de routage, tels qu'estimés par les modèles de temps de trajet et de consommation d'énergie décrits précédemment. Le poids du compromis est noté $\lambda$. La variable de décision $x_\zeta$ prend des valeurs binaires selon que l'arc $\zeta$ appartient ou non à l'itinéraire. La deuxième contrainte est une contrainte classique de conservation du flux. La troisième contrainte impose à chaque partie d'itinéraire possible de vérifier les limites physiques de la capacité de la batterie, désignée par C. Pour réduire l'inquiétude concernant l'autonomie, l'état de charge minimal de la batterie $C_{min}$ peut être strictement supérieur à zéro, par exemple supérieur à une valeur de charge minimale prédéfinie.

De manière préférée, l'algorithme d'optimisation peut être un algorithme du plus court chemin de Bellman-Ford pour garantir l'optimalité de la solution de routage afin d'éviter notamment les valeurs négatives en raison de la présence du terme d'énergie.

Le fait de considérer une station de recharge potentielle sur chaque intersection permet d'identifier spatialement et temporellement les besoins de recharge de manière à minimiser le temps de trajet.

**Etape c) de discrétisation de l'espace prédéterminé en mailles**

On discrétise l'espace prédéterminé par des mailles de discrétisation, de largeur et/ou longueur prédéterminées. Les mailles peuvent être des parallélogrammes, plus particulièrement des rectangles et de manière préférée des carrés.

Pour chaque maille de discrétisation, on identifie le nombre des utilisations de stations de recharge potentielles utilisées pour au moins un trajet possible (pour chaque itinéraire possible de chaque trajet possible) situées dans chaque maille de discrétisation. En d'autres termes, pour chaque maille de discrétisation, on compte le nombre de fois où une station de recharge potentielle située dans la maille de discrétisation considérée est utilisée sur les différents itinéraires possibles des différents trajets possibles de l'étape b). Cette étape permet ainsi d'identifier les zones où le plus grand nombre de stations de recharge est utilisé. Ainsi, à chaque maille de discrétisation, est associé un nombre d'utilisation de stations de recharge potentielles situées dans l'espace de la maille.

Selon une variante, les dimensions des mailles peuvent être adaptatives, notamment à la zone considérée dans l'espace prédéterminé. En d'autres termes, le maillage constitué par l'ensemble des mailles, peut être adaptatif. Le maillage est alors non constant mais peut s'adapter à la densité routière ou à la densité de population. On peut par exemple utiliser des mailles de plus grandes dimensions (longueur et/ou largeur des mailles plus grandes) dans des zones rurales ou moins denses que dans des zones urbaines où les mailles ont alors des dimensions plus petites (longueur et/ou largeur des mailles plus petites). Cette solution permet d'économiser de l'espace mémoire, en conservant un maillage plus précis dans les zones avec plus de portions de route ou de population.

**Etape d) de détermination d'utilisations de stations de recharge par maille**

Lors de cette étape, on choisit un nombre prédéfini N et on détermine les N mailles ayant le plus grand nombre d'utilisations de stations de recharge potentielles situées dans la maille considérée, à l'étape b). En effet, ces mailles correspondent à celles sur lesquelles le plus d'utilisations de recharge ressort. Elles sont donc les plus pertinentes pour construire une station de recharge sur cette maille.

**Etape e) de définition des positions des stations de recharge effectives**

Lors de cette étape, on définit la position du nombre prédéfini N de stations de recharges effectives comme un point de chaque maille de discrétisation parmi le nombre prédéfini de mailles de discrétisation déterminée à l'étape d). En effet, on peut alors positionner les stations de recharge dans une zone de fort besoin de recharge pour véhicule électrique.

Le point de chaque maille où sont positionnées les stations de recharges effectives peut avantageusement être le centre de la maille afin d'être positionnée le plus possible au centre de la zone d'intérêt identifiée (la maille). Alternativement, il pourrait aussi être un sommet de la maille ou n'importe quel point dans la maille.

Comme on a considéré à l'étape b) une station de recharge potentielle sur chaque intersection de manière à identifier spatialement et temporellement les besoins de recharge pour minimiser le temps de trajet, on classe ici les endroits les plus fréquemment utilisés pour recharger les véhicules électriques afin d'optimiser l'emplacement des stations de recharge.

**Etapes optionnelles** :

Selon un mode de réalisation de l'invention, une fois la position du nombre prédéfini de stations de recharge effectives définie à l'étape e), on peut réitérer l'étape b), pour chaque trajet possible, en considérant seulement la position définie du nombre prédéfini de stations de recharge effectives au lieu des stations de recharge potentielles. En d'autres termes, on remplace dans ce cas, les stations de recharge potentielles (positionnées à toutes les intersections de portions de route) par les stations de recharge effectives définies. Grâce à ce remplacement, on peut ainsi déterminer le pourcentage (ou taux) de trajets réalisables, parmi tous les trajets possibles, pour le véhicule électrique en tenant compte seulement des stations de recharge effectives définies. Le trajet est réalisable si le véhicule électrique peut effectuer le trajet sans décharger totalement sa batterie (ou en respectant une valeur de charge minimale de la batterie, la charge minimale pourrait être nulle ou être une valeur strictement positive), le trajet étant non-réalisable dans le cas contraire. De cette manière, on peut évaluer l'incidence du nombre prédéfini de stations de recharge effectives sur le taux de trajet réalisable.

De manière préférée, pour différents nombres prédéfinis de stations de recharge effectives, on peut déterminer différents pourcentages (ou taux) de trajets réalisables (un pour chaque nombre prédéfini de stations de recharge effectives) pour choisir un nombre prédéfini final de stations de recharge effectives. Si le taux de trajets réalisables est inférieur à un certain critère, on peut alors augmenter le nombre prédéfini de stations de recharge effectives pour améliorer le taux de trajets réalisables.

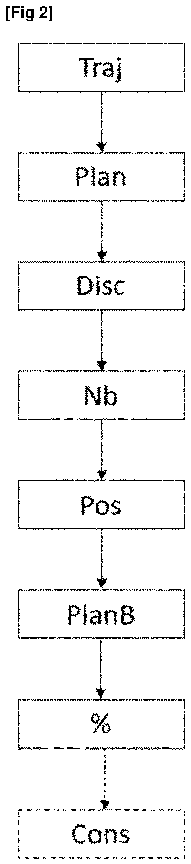

La figure 2 illustre, de manière schématique et non limitative, une deuxième variante de la méthode de positionnement des stations de recharge selon l'invention. Les références identiques à celles de la figure 1 correspondent aux mêmes étapes et ne seront pas redétaillées.

Après l'étape e) où on définit (Pos) la position du nombre prédéfini de stations de recharges effectives comme un point (de préférence le centre) de la chaque maille de discrétisation parmi le nombre prédéfini de mailles de discrétisation déterminée à l'étape d), on peut réitérer (Plan B) l'étape b), pour chaque trajet possible, en considérant seulement la position définie du nombre prédéfini de stations de recharge effectives au lieu des stations de recharge potentielles. Ensuite, on peut déterminer (%) le pourcentage (taux) de trajets réalisables, parmi tous les trajets possibles, pour le véhicule électrique en tenant compte seulement des stations de recharge effectives définies. Le trajet est réalisable si le véhicule électrique peut effectuer le trajet sans décharger totalement sa batterie (ou en respectant une valeur de charge minimale de la batterie, la charge minimale pourrait être nulle ou être une valeur strictement positive), le trajet étant non-réalisable dans le cas contraire. De cette manière, on peut évaluer l'incidence du nombre prédéfini de stations de recharge effectives sur le taux de trajet réalisable.

Comme pour la figure 1, l'étape de construction (Cons) des stations de recharge effectives dans l'espace prédéterminé est facultative.

L'invention concerne également un produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé tel que décrit précédemment, lorsque ledit programme est exécuté sur un ordinateur, un téléphone portable ou un appareil informatique. De ce fait, l'utilisation du procédé est simple et rapide.

L'invention concerne aussi un procédé de construction de stations de recharge dans un espace prédéterminé, dans lequel on réalise les étapes du procédé de positionnement de stations de recharge tel que décrit précédemment et dans lequel, une fois toutes les étapes du procédé de positionnement réalisé, on construit les stations de recharge aux positions définies dans l'espace prédéterminé sur le territoire physique donné correspondant. Ainsi, on peut construire un réseau de stations de recharge pour véhicules électriques sur un territoire donné correspondant à l'espace prédéterminé, de manière optimale pour les principaux trajets correspondant aux liaisons entre des emplacements spécifiques sur le territoire, tels que des villes ou des sites touristiques majeurs. En d'autres termes, l'invention peut concerner l'utilisation du procédé de positionnement tel que décrit, pour la construction des stations de recharge dans l'espace prédéterminé, aux positions définies par le procédé de positionnement tel que décrit.

## Exemple d'application

La méthode selon l'invention a été mise en œuvre à partir de données mises à disposition par l'Institut National de la Statistique et des Etudes Economiques (INSEE) sur le territoire français. Les emplacements choisis pour définir les trajets possibles sont considérés, pour cet exemple, comme l'union entre les cent villes françaises les plus peuplées et les cent villes françaises avec le plus de capacités hôtelières (représentant ainsi les cent villes les plus touristiques). Seules, les villes distantes d'au moins 40 km ont été conservées. Ainsi, 61 emplacements ont été choisis et ont permis la définition de 3600 pairs de trajets possibles entre ces différents emplacements (illustrés par les points noirs avec centre blanc sur la figure 6 où la carte de France est représentée en fonction de sa Latitude Lat en ordonnées et de sa longitude Lon en abscisses).

Pour cet exemple, les données de trafic sur le réseau routier sont issues de HERE Maps pour le 15 mars 2022, à 8 heures du matin. La capacité de la batterie du véhicule électrique considéré est ici de 30 kWh.

Pour chaque trajet possible, un calcul d'itinéraire est réalisé en recherchant la route la plus rapide, en utilisant l'algorithme de Bellman-Ford, et en considérant des réductions de vitesse possibles par rapport à la vitesse moyenne du trafic. Les réductions de vitesse possibles sont considérées de 0, 5 et 10 km/h par rapport à la vitesse moyenne du trafic pour cet exemple.

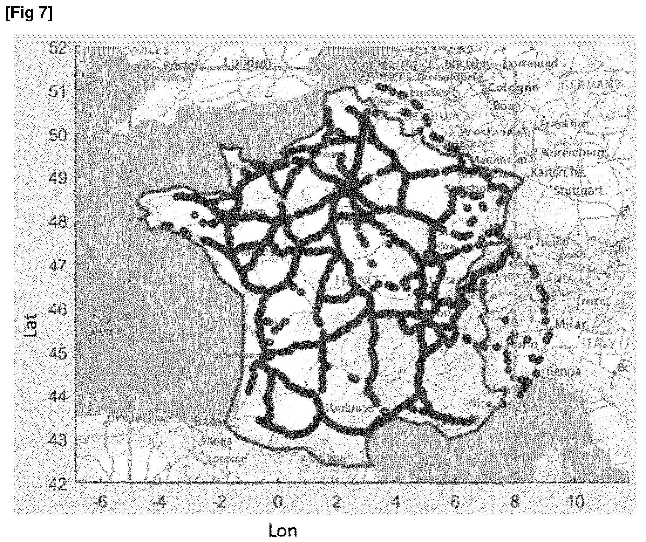

Pour les 3600 trajets possibles entre les différents emplacements choisis sur le territoire français, 29000 stations de recharges potentielles sont considérées, une à chaque intersection de portions de route des différents trajets. Ces 29 000 stations de recharge potentielles sont illustrées sur la figure 7 par les différents points en gris foncé sur la carte de France représentée en fonction de sa Latitude Lat en ordonnées et de sa longitude Lon en abscisses. On peut noter que ces stations de recharges potentielles sont concentrées sur les principaux axes routiers reliant les différents emplacements.

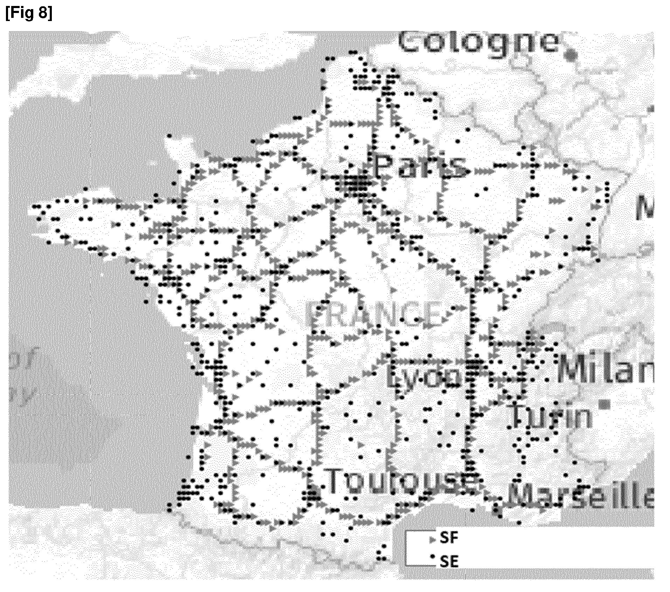

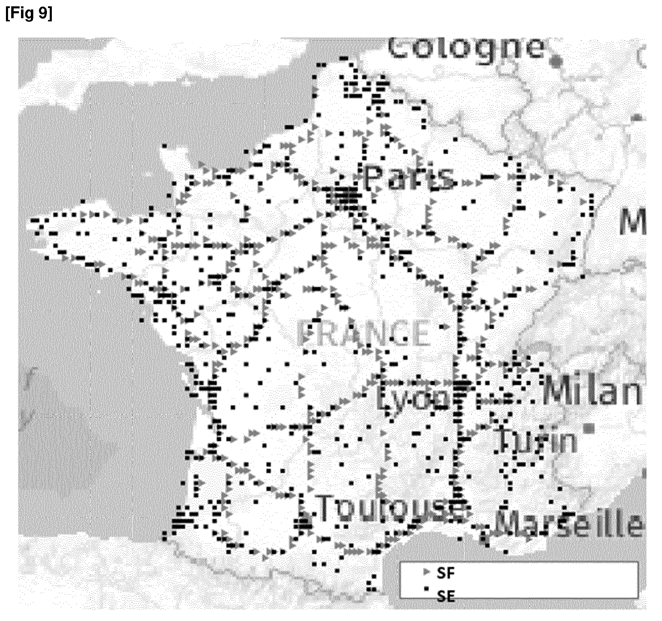

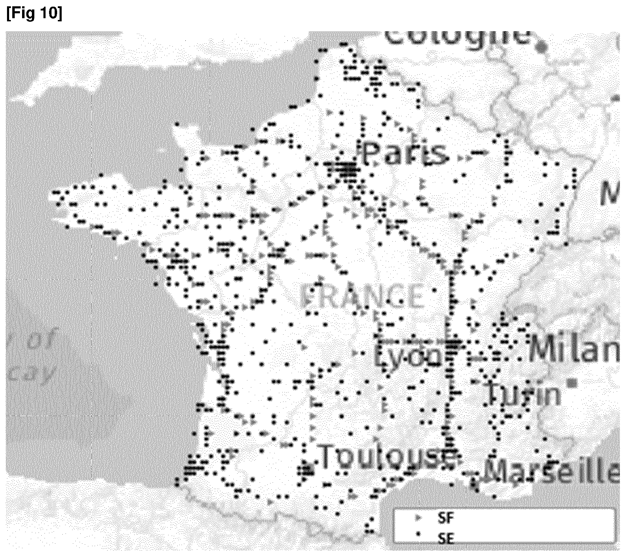

Sur les figures 8, 9 et 10, les points SF représentés par des triangles en gris clair représentent les stations de recharge effectives finales obtenues par la méthode selon l'invention alors que les points SE représentés par les ronds noirs représentent les stations de recharge réelles existantes. Les figures 8, 9 et 10 se distinguent par le choix du nombre prédéfini de stations de recharge effectives qui est de 900 en figure 8, qui est de 600 en figure 9 et qui est 300 en figure 10, chaque nombre prédéfini correspond ainsi à une stratégie de positionnement différente.

L'étape b) de la méthode selon l'invention a ensuite été à nouveau mise en œuvre en ne considérant que les stations de recharge effectives déterminées (en remplacement des stations de recharge potentielles) par l'invention, pour tous les trajets possibles et ce pour les trois stratégies de positionnement correspondant aux figures 8, 9 et 10.

Pour les différents trajets possibles, on déduit de chaque stratégie de positionnement (chacune correspondant à un nombre distinct prédéfini de stations de recharges effectives) issue de la méthode selon l'invention, un taux (pourcentage) de trajets réalisables en véhicule électrique, un temps moyen de trajet en heure et une consommation moyenne énergétique par trajet en kWh. Ces résultats sont comparés aux mêmes résultats à partir des stations de recharge réelles existantes illustrées sur les figures 8 à 10. Le tableau suivant illustre ces résultats :

| | Stations de recharge existantes (art antérieur) | Stratégie 1 (selon l'invention) | Stratégie 2 (selon l'invention) | Stratégie 3 (selon l'invention) |
|---|---|---|---|---|
| Nombre prédéfini de stations de recharges effectives | 750 | 900 | 600 | 300 |
| Taux de trajets réalisables (%) | 96,5 | 98.4 | 97.5 | 80.2 |
| Temps moyen de trajet (h) | 9,1 | 8,6 | 8,8 | 10,7 |
| Consommation moyenne énergétique (kWh) | 122 | 118 | 120 | 149 |

Les stratégies correspondant à un nombre prédéfini de 900 et 600 (stratégies 1 et 2) donnent de meilleurs résultats, sur les trois critères (taux de trajets réalisables, temps moyen de trajet et consommation moyenne énergétique) par rapport au positionnement actuel des stations de recharge réelles existantes, ce qui montre l'intérêt de la méthode selon l'invention. La stratégie 3, qui a seulement 300 stations de recharge effectives montre un résultat moindre. Cependant, ces résultats sont malgré tout intéressants car le gain entre le coût de construction des stations et leur intérêt stratégique de recharge des véhicules électriques est néanmoins important.

**Revendications**

1. Procédé de positionnement de stations de recharge pour véhicules électriques dans un espace prédéterminé donné comprenant un réseau routier pour construire des stations de recharge dans l'espace prédéterminé, le réseau routier comprenant des portions de route (PR) reliées entre elles par des intersections, dans lequel on réalise au moins l'étape suivante :

   a) on définit (Traj) des trajets possibles (T1, T2, T3, T4, T5) dans l'espace prédéterminé, chaque trajet possible (T1, T2, T3, T4, T5) partant d'une origine et arrivant à une destination,

   **caractérisé en ce qu'**on réalise au moins les étapes suivantes :

   b) on utilise (Plan) un planificateur d'itinéraires pour déterminer au moins un itinéraire possible pour chaque trajet possible (T1, T2, T3, T4, T5), chaque itinéraire possible étant défini par une succession de portions de route (PR), et en supposant que chaque intersection comprend une station de recharge potentielle, et on détermine le temps de parcours pour parcourir l'itinéraire possible par un véhicule électrique et/ou la consommation d'énergie par le véhicule électrique de chaque itinéraire possible ainsi que la position des stations de recharge potentielles utilisées par le véhicule électrique sur chaque itinéraire possible, grâce au planificateur d'itinéraires;
   c) on discrétise (Disc) l'espace prédéterminé par des mailles de discrétisation, de largeur et/ou longueur prédéterminées, et on identifie le nombre d'utilisations de stations de recharge potentielles utilisées pour au moins un trajet possible (T1, T2, T3, T4, T5), situées dans chaque maille de discrétisation ;
   d) on choisit un nombre prédéfini N et on détermine les N mailles de discrétisation ayant le plus grand nombre d'utilisations de stations de recharge potentielles et ;
   e) on définit (Pos) la position du nombre prédéfini de stations de recharges effectives (SF) comme un point de chaque maille de discrétisation du nombre prédéfini de mailles de discrétisation ;

   et dans lequel au moins les étapes b) à e) sont mises en œuvre par des moyens informatiques et de préférence où toutes les étapes sont mises en œuvre par des moyens informatiques.

2. Procédé de positionnement de stations de recharge selon la revendication 1, dans lequel, à l'étape a), on détermine dans l'espace prédéterminé un nombre prédéterminé d'emplacements (E1, E2, E3, E4) et on définit les trajets possibles (T1, T2, T3, T4, T5), chaque trajet possible étant défini par un trajet rejoignant deux emplacements (E1, E2, E3, E4) déterminés distincts, l'un des deux emplacements (E1, E2, E3, E4) déterminés distincts étant l'origine du trajet possible considéré et l'autre étant la destination du trajet possible (T1, T2, T3, T4, T5) considéré.

3. Procédé de positionnement de stations de recharge selon la revendication 2, dans lequel on acquiert, au moyen d'un système d'enregistrement en ligne, des données sur les villes de l'espace prédéterminé pour choisir les emplacements (E1, E2, E3, E4), les données étant de préférence la population totale des villes et/ou leur capacité hôtelière, , pour déterminer lesdits emplacements.

4. Procédé de positionnement de stations de recharge selon l'une des revendications 2 ou 3, dans lequel les différents emplacements (E1, E2, E3, E4) sont distants deux à deux d'au moins un certain critère, de préférence d'au moins 20km, et de manière encore préférée, d'au moins 40 km.

5. Procédé de positionnement de stations de recharge selon l'une des revendications 2 à 4, dans lequel on choisit un nombre défini d'emplacements (E1, E2, E3, E4), le nombre défini d'emplacements (E1, E2, E3, E4) étant inférieur à 200, et de préférence inférieur à 100.

6. Procédé de positionnement de stations de recharge selon l'une des revendications précédentes, dans lequel le planificateur d'itinéraires réalise au moins les étapes suivantes :

   - on construit (Gr) un graphe de routage à partir du réseau routier, les sommets du graphe de routage représentant les intersections de chaque portion de route (PR) et les arcs du graphe de routage représentant les portions de route (PR),
   - on positionne (Sp) les stations de recharge potentielles sur le graphe de routage,
   - on étend (GrE) le graphe de routage en multipliant au moins certains arcs en fonction de paramètres prédéfinis, les paramètres prédéfinis comprenant la vitesse de circulation sur la portion de route considérée et/ou le niveau de recharge lors de l'arrêt à une station de recharge potentielle,
   - on construit(Conso) un modèle de consommation énergétique, le modèle énergétique définissant la consommation d'énergie du véhicule électrique en fonction de paramètres prédéterminés en prenant en compte les recharges éventuelles de la batterie du véhicule électrique,
   - pour chaque trajet possible (T1, T2, T3, T4, T5, T6), on applique le modèle de consommation énergétique sur les différents arcs du graphe routage étendu à chaque itinéraire possible pour chaque trajet possible et on définit comme itinéraire final du trajet possible (T1, T2, T3, T4, T5, T6), l'ensemble des arcs permettant de minimiser (Opt), par un algorithme d'optimisation tel qu'un algorithme du plus court chemin de Bellman-Ford, le temps de parcours, ou la consommation d'énergie ou un compromis défini comme un poids relatif entre ces deux paramètres,
   - on détermine (Pos_niv), à partir de l'itinéraire final défini, les positions des stations recharge potentielles utilisées et le niveau de recharge réalisé à chaque station de recharge potentielle utilisée pour le trajet possible (T1, T2, T3, T4, T5, T6) considéré.

7. Procédé de positionnement de stations de recharge selon la revendication 6, dans lequel les portions de route (PR) prennent en compte la topographie du réseau routier, notamment la pente de la portion de route, l'infrastructure et la signalisation au moyen d'un système d'information géographique, les données de trafic au moyen d'un système de géolocalisation ou d'un système d'information géographique et de préférence les données météorologiques au moyen d'un système d'interface de programmation d'application.

8. Procédé de positionnement de stations de recharge selon l'une des revendications 6 ou 7, dans lequel on acquiert une mesure, sur chaque portion de route (PR) du réseau routier, du profil de vitesse (Pv) de plusieurs véhicules, au moyen d'un système de géolocalisation ou d'un téléphone embarqué pour déterminer, d'une part la vitesse moyenne des véhicules sur la portion de route, et d'autre part la probabilité d'arrêt des véhicules à la fin de la portion de route considérée, la probabilité d'arrêt étant déterminée par le pourcentage de véhicule pour lequel un arrêt est considéré à la fin de la portion de route, l'arrêt du véhicule étant considéré si, sur au moins un point de mesure de la deuxième moitié (P2) de la portion de route (PR), une vitesse du véhicule est inférieure à une valeur prédéfinie (C), la valeur prédéfinie étant de préférence inférieure ou égale à 10 km/h.

9. Procédé de positionnement de stations de recharge selon l'une des revendications précédentes, dans lequel, une fois la position du nombre prédéfini de stations de recharge effectives définie à l'étape e), on réitère (PlanB) l'étape b), pour chaque trajet possible (T1, T2, T3, T4, T5, T6), en considérant seulement la position définie du nombre prédéfini de stations de recharge effectives au lieu des stations de recharge potentielles, et on détermine (%) le pourcentage de trajets réalisables, parmi tous les trajets possibles (T1, T2, T3, T4, T5, T6), pour le véhicule électrique, le trajet étant réalisable si le véhicule électrique peut effectuer le trajet sans décharger totalement sa batterie, le trajet étant non-réalisable dans le cas contraire.

10. Procédé de positionnement de stations de recharge selon la revendication 9, dans lequel, on répète les étapes du procédé pour différents nombres prédéfinis de stations de recharge effectives, et on détermine différents pourcentages de trajets réalisables pour choisir un nombre prédéfini final de stations de recharge effectives.

11. Produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des revendications précédentes, lorsque ledit programme est exécuté sur un ordinateur, un téléphone portable ou un appareil informatique.

12. Procédé de construction de stations de recharge dans un espace prédéterminé, dans lequel on réalise les étapes du procédé de positionnement de stations de recharge selon l'une des revendications 1 à 10 et dans lequel, une fois toutes les étapes du procédé de positionnement réalisé, on construit (Cons) les stations de recharge aux positions définies dans l'espace prédéterminé.

**Patentansprüche**

1. Verfahren zur Positionsbestimmung von Ladestationen für elektrische Fahrzeuge in einem gegebenen vorbestimmten Raum, der ein Straßennetz umfasst, um Ladestationen in dem vorbestimmten Raum zu errichten, wobei das Straßennetz Straßenabschnitte (PR) umfasst, die durch Kreuzungen miteinander verbunden sind, wobei mindestens der folgende Schritt ausgeführt wird:

   a) Definieren (Traj) möglicher Fahrten (T1, T2, T3, T4, T5) in dem vorbestimmten Raum, wobei jede mögliche Fahrt (T1, T2, T3, T4, T5) an einem Ursprung startet und an einem Ziel ankommt,

   **dadurch gekennzeichnet, dass** mindestens die folgenden Schritte ausgeführt werden:

   b) Nutzen (Plan) eines Routenplaners, um mindestens eine mögliche Route für jede mögliche Fahrt (T1, T2, T3, T4, T5) zu bestimmen, wobei jede mögliche Route durch eine Folge von Straßenabschnitten (PR) definiert wird und wobei angenommen wird, dass jede Kreuzung eine potenzielle Ladestation umfasst, und Bestimmen der Fahrzeit zum Zurücklegen der möglichen Route mit einem elektrischen Fahrzeug und/oder des Energieverbrauchs des elektrischen Fahrzeugs für jede mögliche Route sowie der Position der potenziellen Ladestationen, die das elektrische Fahrzeug auf jeder möglichen Route nutzt, mit Hilfe des Routenplaners;
   c) Diskretisieren (Disc) des vorbestimmten Raums in Diskretisierungsmaschen mit vorbestimmter Breite und/oder Länge und Identifizieren der Anzahl von Nutzungen potenzieller Ladestationen, die für mindestens eine mögliche Fahrt (T1, T2, T3, T4, T5) genutzt werden und sich in jeder Diskretisierungsmasche befinden;
   d) Auswählen einer vordefinierten Anzahl N und Bestimmen der N Diskretisierungsmaschen, die die größte Anzahl von Nutzungen potenzieller Ladestationen aufweisen; und
   e) Definieren (Pos) der Position der vordefinierten Anzahl von effektiven Ladestationen (SF) als einen Punkt jeder Diskretisierungsmasche der vordefinierten Anzahl von Diskretisierungsmaschen;

   und wobei mindestens die Schritte b) bis e) durch Informatikmittel umgesetzt werden und wobei vorzugsweise alle Schritte durch Informatikmittel umgesetzt werden.

2. Verfahren zur Positionsbestimmung von Ladestationen nach Anspruch 1, wobei in Schritt a) in dem vorbestimmten Raum eine vorbestimmte Anzahl von Orten (E1, E2, E3, E4) bestimmt wird und die möglichen Fahrten (T1, T2, T3, T4, T5) definiert werden, wobei jede mögliche Fahrt durch eine Fahrt definiert wird, die zwei unterschiedliche bestimmte Orte (E1, E2, E3, E4) verbindet, wobei einer der zwei unterschiedlichen bestimmten Orte (E1, E2, E3, E4) der Ursprung der betrachteten möglichen Fahrt ist und der andere das Ziel der betrachteten möglichen Fahrt (T1, T2, T3, T4, T5) ist.

3. Verfahren zur Positionsbestimmung von Ladestationen nach Anspruch 2, wobei mit Hilfe eines Online-Speichersystems Daten über die Städte des vorbestimmten Raums erfasst werden, um die Orte (E1, E2, E3, E4) auszuwählen, wobei die Daten vorzugsweise die Gesamtbevölkerung der Städte und/oder ihre Hotelkapazitäten sind, um die Orte zu bestimmen.

4. Verfahren zur Positionsbestimmung von Ladestationen nach einem der Ansprüche 2 oder 3, wobei die unterschiedlichen Orte (E1, E2, E3, E4) jeweils paarweise um mindestens ein gewisses Kriterium, vorzugsweise um mindestens 20 km und noch bevorzugter um mindestens 40 km, voneinander entfernt sind.

5. Verfahren zur Positionsbestimmung von Ladestationen nach einem der Ansprüche 2 bis 4, wobei eine definierte Anzahl von Orten (E1, E2, E3, E4) ausgewählt wird, wobei die definierte Anzahl von Orten (E1, E2, E3, E4) kleiner als 200 und vorzugsweise kleiner als 100 ist.

6. Verfahren zur Positionsbestimmung von Ladestationen nach einem der vorangehenden Ansprüche, wobei der Routenplaner mindestens die folgenden Schritte durchführt:

- Erstellen (Gr) eines Routing-Graphen mit Hilfe des Straßennetzes, wobei die Knoten des Routing-Graphen die Kreuzungen jedes Straßenabschnitts (PR) darstellen und die Kanten des Routing-Graphen die Straßenabschnitte (PR) darstellen,
- Positionieren (Sp) der potenziellen Ladestationen auf dem Routing-Graphen,
- Erweitern (GrE) des Routing-Graphen durch Multiplizieren mindestens gewisser Kanten in Abhängigkeit von vordefinierten Parametern, wobei die vordefinierten Parameter die Fahrgeschwindigkeit auf dem betrachteten Straßenabschnitt und/oder den Ladezustand beim Halt an einer potenziellen Ladestation umfassen,
- Erstellen (Conso) eines Energieverbrauchsmodells, wobei das Energiemodell den Energieverbrauch des elektrischen Fahrzeugs in Abhängigkeit von vorbestimmten Parametern unter Berücksichtigung der möglichen Ladevorgänge des Akkus des elektrischen Fahrzeugs definiert,
- für jede mögliche Fahrt (T1, T2, T3, T4, T5, T6), Anwenden des Energieverbrauchsmodells auf den unterschiedlichen Kanten des erweiterten Routing-Graphen auf jede mögliche Route für jede mögliche Fahrt und Definieren, als endgültige Route der möglichen Fahrt (T1, T2, T3, T4, T5, T6), der Gesamtheit der Kanten, die, mit Hilfe eines Optimierungsalgorithmus wie etwa eines Bellman-Ford-Algorithmus des kürzesten Pfads, das Minimieren (Opt) der Fahrzeit oder des Energieverbrauchs oder einen Kompromiss, der als ein relatives Gewicht zwischen diesen zwei Parametern definiert ist, ermöglichen,
- Bestimmen (Pos_niv), mit Hilfe der definierten endgültigen Route, der Positionen der genutzten potenziellen Ladestationen und des erreichten Ladezustands an jeder potenziellen Ladestation, die für die betrachtete mögliche Fahrt (T1, T2, T3, T4, T5, T6) genutzt wird.

7. Verfahren zur Positionsbestimmung von Ladestationen nach Anspruch 6, wobei die Straßenabschnitte (PR) die Topographie des Straßennetzes, insbesondere die Steigung des Straßenabschnitts, die Infrastruktur und die Beschilderung, mit Hilfe eines geografischen Informationssystems, die Verkehrsdaten mit Hilfe eines Geolokalisierungssystems oder eines geografischen Informationssystems und vorzugsweise die Wetterdaten mit Hilfe eines Anwendungsprogrammierschnittstellensystems berücksichtigen.

8. Verfahren zur Positionsbestimmung von Ladestationen nach einem der Ansprüche 6 oder 7, wobei auf jedem Straßenabschnitt (PR) des Straßennetzes eine Messung des Geschwindigkeitsprofils (Pv) mehrerer Fahrzeuge mit Hilfe eines Geolokalisierungssystems oder eines an Bord befindlichen Telefons erfasst wird, um einerseits die mittlere Geschwindigkeit der Fahrzeuge auf dem Straßenabschnitt und andererseits die Wahrscheinlichkeit eines Halts der Fahrzeuge am Ende des betrachteten Straßenabschnitts zu bestimmen, wobei die Wahrscheinlichkeit eines Halts durch den Prozentsatz von Fahrzeugen bestimmt wird, für die ein Halt am Ende des Straßenabschnitts in Betracht gezogen wird, wobei der Halt des Fahrzeugs in Betracht gezogen wird, wenn an mindestens einem Messpunkt der zweiten Hälfte (P2) des Straßenabschnitts (PR) eine Geschwindigkeit des Fahrzeugs kleiner als ein vordefinierter Wert (C) ist, wobei der vordefinierte Wert vorzugsweise kleiner als oder gleich 10 km/h ist.

9. Verfahren zur Positionsbestimmung von Ladestationen nach einem der vorangehenden Ansprüche, wobei, nachdem die Position der vordefinierten Anzahl von effektiven Ladestationen in Schritt e) definiert wurde, der Schritt b) für jede mögliche Fahrt (T1, T2, T3, T4, T5, T6) wiederholt wird (PlanB) und dabei nur die definierte Position der vordefinierten Anzahl von effektiven Ladestationen anstelle der potenziellen Ladestationen betrachtet wird und der Prozentsatz (%) von durchführbaren Fahrten aus allen möglichen Fahrten (T1, T2, T3, T4, T5, T6) bestimmt wird, wobei die Fahrt für das elektrische Fahrzeug durchführbar ist, wenn das elektrische Fahrzeug die Fahrt vornehmen kann, ohne seinen Akku komplett zu entladen, wobei die Fahrt im gegenteiligen Fall nicht durchführbar ist.

10. Verfahren zur Positionsbestimmung von Ladestationen nach Anspruch 9, wobei die Schritte des Verfahrens für unterschiedliche vordefinierte Anzahlen von effektiven Ladestationen wiederholt werden und unterschiedliche Prozentsätze von durchführbaren Fahrten bestimmt werden, um eine endgültige vordefinierte Anzahl von effektiven Ladestationen auszuwählen.

11. Computerprogrammprodukt, das aus einem Kommunikationsnetz heruntergeladen werden kann und/oder auf einem computerlesbaren Träger gespeichert ist und/oder durch einen Prozessor oder einen Server ausführbar ist, umfassend Programmcodeanweisungen für die Umsetzung des Verfahrens nach einem der vorangehenden Ansprüche, wenn das Programm auf einem Computer, einem Mobiltelefon oder einem Informatikgerät ausgeführt wird.

12. Verfahren zur Errichtung von Ladestationen in einem vorbestimmten Raum, wobei die Schritte des Verfahrens zur Positionsbestimmung von Ladestationen nach einem der Ansprüche 1 bis 10 durchgeführt werden und wobei nach Durchführung aller Schritte des Verfahrens zur Positionsbestimmung die Ladestationen an den definierten Positionen in dem vorbestimmten Raum errichtet werden (Cons) .

**Claims**

1. Method for positioning charging stations for electric vehicles in a given predetermined space comprising a road network in order to construct charging stations in the predetermined space, the road network comprising road portions (PR) connected to one another by intersections, wherein at least the following step is carried out:

   a) possible journeys (T1, T2, T3, T4, T5) are defined (Traj) in the predetermined space, each possible journey (T1, T2, T3, T4, T5) leaving from an origin and arriving at a destination,

   **characterized in that** at least the following steps are carried out:

   b) a route planner is used (Plan) to determine at least one possible route for each possible journey (T1, T2, T3, T4, T5), each possible route being defined by a succession of road portions (PR), and by supposing that each intersection comprises a potential charging station, and the travel time for an electric vehicle to travel the possible route and/or the energy consumption by the electric vehicle of each possible route as well as the position of the potential charging stations used by the electric vehicle on each possible route are determined, by virtue of the route planner;
   c) the predetermined space is discretized (Disc) by means of discretization cells, of predetermined width and/or length, and the number of uses of potential charging stations used for at least one possible journey (T1, T2, T3, T4, T5), situated in each discretization cell, is identified;
   d) a predefined number N is chosen and the N discretization cells having the largest number of uses of potential charging stations are determined, and;
   e) the position of the predefined number of actual charging stations (SF) is defined (Pos) as a point in each discretization cell of the predefined number of discretization cells;

   and wherein at least steps b) to e) are implemented by computing means and preferably where all the steps are implemented by computing means.

2. Method for positioning charging stations according to Claim 1, wherein, in step a), a predetermined number of locations (E1, E2, E3, E4) is determined in the predetermined space and the possible journeys (T1, T2, T3, T4, T5) are defined, each possible journey being defined by a journey joining two distinct determined locations (E1, E2, E3, E4), one of the two distinct determined locations (E1, E2, E3, E4) being the origin of the possible journey under consideration and the other being the destination of the possible journey (T1, T2, T3, T4, T5) under consideration.

3. Method for positioning charging stations according to Claim 2, wherein data on the towns and cities in the predetermined space are acquired, by means of an online storage system, in order to choose the locations (E1, E2, E3, E4), the data preferably being the total population of the towns and cities and/or their hotel capacity, in order to determine said locations.

4. Method for positioning charging stations according to one of Claims 2 and 3, wherein the various locations (E1, E2, E3, E4) are pairwise distant by at least a certain criterion, preferably by at least 20 km and more preferably by at least 40 km.

5. Method for positioning charging stations according to one of Claims 2 to 4, wherein a defined number of locations (E1, E2, E3, E4) is chosen, the defined number of locations (E1, E2, E3, E4) being less than 200 and preferably less than 100.

6. Method for positioning charging stations according to one of the preceding claims, wherein the route planner carries out at least the following steps:

- a routing graph is constructed (Gr) on the basis of the road network, the vertices of the routing graph representing the intersections of each road portion (PR) and the edges of the routing graph representing the road portions (PR),
- the potential charging stations are positioned (Sp) on the routing graph,
- the routing graph is extended (GrE) by multiplying at least certain edges as a function of predefined parameters, the predefined parameters comprising the speed of traffic on the road portion under consideration and/or the level of charge when a potential charging station is stopped at,
- a model of energy consumption is constructed (Conso), the energy model defining the energy consumption of the electric vehicle as a function of predetermined parameters, taking into account the possible charges of the battery of the electric vehicle,
- for each possible journey (T1, T2, T3, T4, T5, T6), the model of energy consumption on the various edges of the extended routing graph is applied to each possible route for each possible journey and the set of edges making it possible to minimize (Opt), by means of an optimization algorithm such as a Bellman-Ford shortest path algorithm, the travel time or the energy consumption or a compromise defined as a relative weight between these two parameters is defined as the final route of the possible journey (T1, T2, T3, T4, T5, T6),
- the positions of the potential charging stations used and the level of charging carried out at each potential charging station used for the possible journey (T1, T2, T3, T4, T5, T6) under consideration is determined (Pos_niv) on the basis of the defined final route.

7. Method for positioning charging stations according to Claim 6, wherein the road portions (PR) take into account the topography of the road network, notably the gradient of the road portion, the infrastructure and the traffic signals by means of a geographical information system, the traffic data by means of a geolocation system or a geographical information system and preferably the weather data by means of an application programming interface system.

8. Method for positioning charging stations according to one of Claims 6 and 7, wherein a measurement, on each road portion (PR) of the road network, of the speed profile (Pv) of several vehicles is acquired by means of a geolocation system or an onboard telephone in order to determine, on the one hand, the average speed of the vehicles on the road portion and, on the other hand, the probability that the vehicles will stop at the end of the road portion under consideration, the stopping probability being determined by the percentage of vehicles for which a stop is considered at the end of the road portion, the stopping of the vehicle being considered if, at at least one measurement point of the second half (P2) of the road portion (PR), a speed of the vehicle is less than a predefined value (C), the predefined value preferably being less than or equal to 10 km/h.

9. Method for positioning charging stations according to one of the preceding claims, wherein, once the position of the predefined number of actual charging stations has been defined in step e), step b) is reiterated (PlanB), for each possible journey (T1, T2, T3, T4, T5, T6), considering only the defined position of the predefined number of actual charging stations instead of the potential charging stations, and the percentage of journeys which can be carried out, from among all the possible journeys (T1, T2, T3, T4, T5, T6), for the electric vehicle is determined (%), the journey being able to be carried out if the electric vehicle can make the journey without totally discharging its battery, the journey not being able to be carried out otherwise.

10. Method for positioning charging stations according to Claim 9, wherein the steps of the method are repeated for various predefined numbers of actual charging stations and various percentages of journeys which can be carried out are determined in order to choose a final predefined number of actual charging stations.

11. Computer program product which can be downloaded from a communication network and/or stored on a medium which can be read by computer and/or can be executed by a processor or a server, comprising program code instructions for implementing the method according to one of the preceding claims, when said program is executed on a computer, a mobile phone or a computer device.

12. Method for constructing charging stations in a predetermined space, wherein the steps of the method for positioning charging stations according to one of Claims 1 to 10 are carried out and wherein, once all the steps of the positioning method have been carried out, the charging stations are constructed (Cons) in the positions defined in the predetermined space.

**[Fig 1]**

[Fig 2]

[Fig 3]

[Fig 4]

Plan

[Fig 5]

[Fig 6]

[Fig 7]

[Fig 8]

**[Fig 9]**

[Fig 10]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016300170 AA

**Littérature non-brevet citée dans la description**

- **LIU, J.** ; **PEPER, J.** ; **LIN, G.** ; **ZHOU, Y.** ; **AWASTHI, S.** ; **LI, Y.** ; **REHTANZ, C.** A planning strategy considering multiple factors for electric vehicle charging stations along German motorways. *International Journal of Electrical Power & Energy Systems*, 2021, vol. 124
- **SHAOYUN GE**. the planning of electric vehicle charging station base on grid partition method. *ICECE*, 16 September 2011, ISBN 978-1-4244-8162-0, 2726-2730
- Optimal location and sizing of fast charging stations for electric vehicles by incorporating traffic and power networks. **ISLAM MD MAINUL**. IET Intelligent transport systems, the Institution of engineering and technology. Michael Faraday House, 01 October 2018, vol. 12, 947-957
- **F. A. V. PINTO** ; **L. H. M. K. COSTA** ; **M. D. DE AMORIM**. Modeling Spare Capacity Reuse in EV Charging Stations based on the Li-ion Battery Profile. *International Conference on Connected Vehicles and Expo (ICCVE)*, 2014, 92-98
- **M. TREIBER** ; **A. HENNECKE** ; **D. HELBING**. Congested Traffic States in Empirical Observations and Microscopic Simulations. *Physical Review E*, 2000, vol. 62, 1805-1824